# EUROPEAN PATENT APPLICATION

(11) **EP 2 871 106 A1**
(43) Date of publication of application: **13.05.2015**
(21) Application number: 12880715.3
(22) Date of filing: 05.07.2012
(51) Int. Cl.: B60W 10/26, H02J 7/00, B66F 9/24

(54) **BATTERY CHARGING SYSTEM FOR HYBRID CONSTRUCTION MACHINERY BY USING ROTATIONAL FORCE OF FAN AND CHARGING METHOD THEREFOR**

(71) Applicant: Volvo Construction Equipment AB, 631 85 Eskilstuna (SE)
(72) Inventor: OK, Dong-Cheol, Changwon-si Gyeongsangnam-do 642-370 (KR); PARK, Seong-Cheol, Changwon-si Gyeongsangnam-do 642-769 (KR)
(74) Representative: Zimmermann, Tankred Klaus
(86) International application number: PCT/KR2012/005339
(87) International publication number: WO 2014/007413

(57) **Abstract**

A battery charging system and a charging method thereof for a hybrid construction machine using a rotating force of a fan are disclosed. The battery charging system includes a fan, a controller controlling a braking device of the fan and a battery which is charged with electric energy. The charging method includes controlling, by the controller, a braking device of the fan to decrease a fan rotating speed down to a target fan rotating speed if the current target fan rotating speed, which is obtained depending on a current cooling water temperature, a hydraulic fluid temperature, and an engine intake air temperature, is lower than an actually measured fan rotating speed; and charging, by the braking device, electric energy which is caused by a rotating force that is generated while the fan rotating speed is decreased from the actually measured fan rotating speed to the target fan rotating speed in the battery. Since the electric energy generated by the rotating force is stored in the battery, the engine operation time is reduced, and thus a fuel efficiency can be improved.

## Description

### TECHNICAL FIELD

The present invention relates to a battery charging system and a charging method thereof for a hybrid construction machine using a rotating force of a fan. More particularly, the present invention relates to a battery charging system and a charging method thereof for a hybrid construction machine using a rotating force of a fan, which can reduce an engine operating time through storing of electric energy that is generated by the rotating force of the fan in a battery, and thus can improve fuel efficiency.

### BACKGROUND ART

In general, Korean patent publication "KR1020110084960A Working machine" discloses a hybrid construction machine as a working machine, which includes a DC bus connected to a swing motor through an inverter circuit, a battery connected to the DC bus through a booster converter and a switch, a controller driving the inverter circuit and the booster converter, a coolant circulation system including a pump motor, and the inverter circuit connected to the DC bus to drive the pump motor.

The controller has a mode for lowering a voltage of the DC bus, and in the mode, the controller operates the inverter circuit to make the pump motor consume a power after making the switch in a non-contact state.

However, in the above-described technology in the related art, a cooling fan that is fixed to a typical engine crank shaft is rotated in proportion to an engine rpm regardless of the temperature of cooling water.

As a result, in the case where the engine rpm is high even if the temperature of the cooling water is low, the rotating speed of the fan becomes high, and thus the fan is rotated at high speed to cause inefficiency of the fan.

### DISCLOSURE

### TECHNICAL PROBLEM

Therefore, the present invention has been made to solve the above-mentioned problems occurring in the related art, and an object of the present invention is to provide a battery charting system and a charging method thereof for a hybrid construction machine using a rotating force of a fan, which can provide an energy recovery system that is useful to a charging system of a hybrid system by generating a larger amount of electric energy through compulsory reduction of the rotating speed of a fan using a braking device and a controller mounted thereon and storing the electric energy that is generated during the rotation in a battery in the case where a temperature of cooling water is low.

### TECHNICAL SOLUTION

In accordance with an aspect of the present invention, there is provided a charging method of a battery charging system for a hybrid construction machine using a rotating force of a fan, including the fan, a controller controlling a braking device of the fan, and a battery charged with electric energy, which includes controlling, by the controller, the braking device to decrease a fan rotating speed down to a target fan rotating speed if the current target fan rotating speed, which is obtained depending on a current cooling water temperature, a hydraulic fluid temperature, and an engine intake air temperature, is lower than an actually measured fan rotating speed; and charging, by the braking device, the electric energy, which is caused by a rotating force that is generated while the fan rotating speed is decreased from the actually measured fan rotating speed to the target fan rotating speed, in the battery.

Preferably, the step of controlling the braking device includes obtaining, by the controller, the current target fan rotating speed depending on the current cooling water temperature, the hydraulic fluid temperature, and the engine intake air temperature using the target fan rotating speed that is differently set according to the current cooling water temperature, the hydraulic fluid temperature, and the engine intake air temperature; comparing the currently obtained target fan rotating speed with the actually measured fan rotating speed; and outputting a first control signal for increasing the fan rotating speed up to the target fan rotating speed to the fan if the target fan rotating speed is higher than the actually measured fan rotating speed as the result of the comparison, and outputting a second control signal for decreasing the fan rotating speed down to the target fan rotating speed to the braking device if the target fan rotating speed is lower than the actually measured fan rotating speed as the result of the comparison.

In accordance with another aspect of the present invention, there is provided a battery charging system for a hybrid construction machine using a rotating force of a fan, which includes a speed measurement means for measuring an actual fan rotating speed during measurement; a controller outputting a control signal for decreasing the fan rotating speed down to a target fan rotating speed if the current target fan rotating speed, which is obtained depending on a current cooling water temperature, a hydraulic fluid temperature, and an engine intake air temperature, is lower than an actually measured fan rotating speed that is measured by the speed measurement means; a braking device of the fan braking a fan rotating operation under the control of the controller; and a battery charged with electric energy which is caused by a rotating force that is generated while the fan rotating speed is decreased from the actually measured fan rotating speed to the target fan rotating speed by the braking device.

Preferably, the controller obtains the current target fan rotating speed depending on the current cooling water temperature, the hydraulic fluid temperature, and the engine intake air temperature using the target fan rotating speed that is differently set according to the current cooling water temperature, the hydraulic fluid temperature, and the engine intake air temperature; compares the currently obtained target fan rotating speed with the actually measured fan rotating speed; and outputs a first control signal for increasing the fan rotating speed up to the target fan rotating speed to the fan if the target fan rotating speed is higher than the actually measured fan rotating speed as the result of the comparison, while outputting a second control signal for decreasing the fan rotating speed down to the target fan rotating speed to the braking device if the target fan rotating speed is lower than the actually measured fan rotating speed as the result of the comparison.

### ADVANTAGEOUS EFFECT

Since the battery charting system according to the present invention stores the electric energy that is generated by the rotating operation of the cooling fan in the battery, the additional energy that is generated according to the hybrid concept and is stored in the battery can be used to reduce the engine operation time, and thus the fuel efficiency can be improved.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a block diagram illustrating the configuration of the battery charging system for a hybrid construction machine using a rotating force of a fan according to an embodiment of the present invention;
Fig. 2 is a flowchart sequentially illustrating the operation of a battery charging system for a hybrid construction machine using a rotating force of a fan according to the present invention; and
Fig. 3 is a diagram illustrating an example of a battery charging system for a hybrid construction machine according to the present invention.

### BEST MODE

Hereinafter, preferred embodiments of the present invention will be described in detail with reference to the accompanying drawings.

The matters defined in the description, such as the detailed construction and elements, are nothing but specific details provided to assist those of ordinary skill in the art in a comprehensive understanding of the invention, and the present invention is not limited to the embodiments disclosed hereinafter.

For clear explanation of the present invention, portions that do not have relation to the explanation are omitted, and in the entire description of the present invention, similar drawing reference numerals are used for the similar elements across various figures.

In the entire description and claims of the present invention, the term "comprises" and/or "includes" used in the description means that one or more other components are not excluded in addition to the described components unless specially described on the contrary.

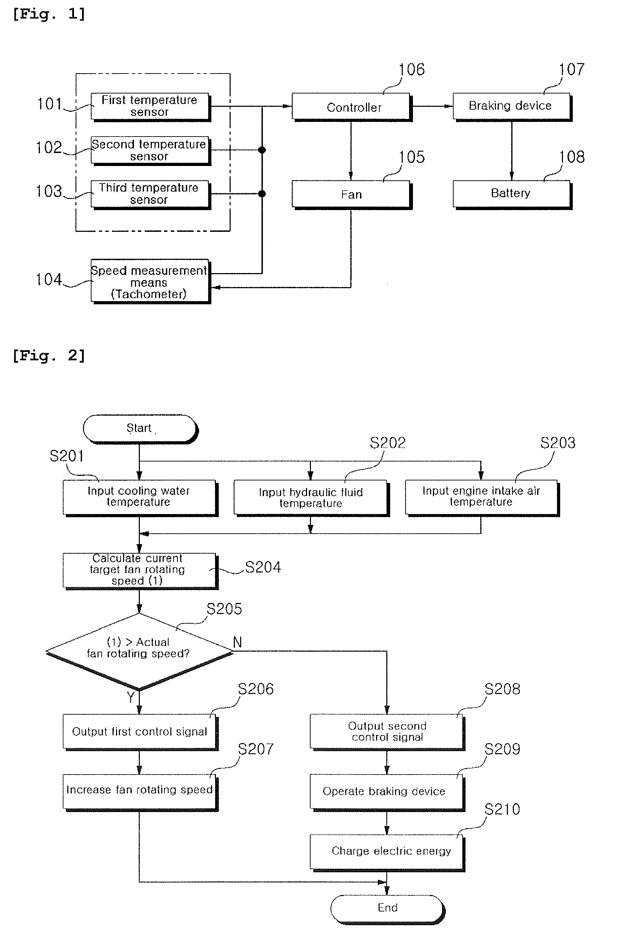

Fig. 1 is a block diagram illustrating the configuration of the battery charging system for a hybrid construction machine using a rotating force of a fan according to an embodiment of the present invention.

As illustrated in Fig. 1, the battery charging system according to the present invention is configured to include a plurality of temperature sensors 101 to 103, a speed measurement means (e.g., tachometer) 104, a fan 105, a controller 106, a braking device 107, and a battery 108.

Here, the plurality of temperature sensors 101 to 103 include a first temperature sensor 101 sensing a cooling water temperature, a second temperature sensor 102 sensing a hydraulic fluid temperature, and a third temperature sensor 103 sensing an engine intake air temperature. The controller 106 obtains the current target fan rotating speed using information on the cooling water temperature, the hydraulic fluid temperature, and the engine intake air temperature sensed by the respective temperature sensors 101 to 103.

The speed measurement means 104 is electrically connected to the controller, and measures and inputs the current fan rotating speed to the controller connected thereto. For example, a tachometer may be used. The current fan rotating speed that is input to the controller is used to determine a control signal to be output.

The fan 105 may be a cooling fan that is fixed to an engine crank shaft. If the cooling water temperature is low, the rotating speed is compulsorily decreased by the braking device, and thus a larger amount of electric energy can be generated. The generated electric energy is stored in the battery.

The controller 106 outputs a control signal for decreasing the fan rotating speed down to a target fan rotating speed if the current target fan rotating speed, which is obtained depending on the current cooling water temperature, the hydraulic fluid temperature, and the engine intake air temperature, is lower than the actually measured fan rotating speed that is measured by the speed measurement means 104. That is, the controller obtains the current target fan rotating speed depending on the current cooling water temperature, the hydraulic fluid temperature, and the engine intake air temperature using the target fan rotating speed that is differently set according to the current cooling water temperature, the hydraulic fluid temperature, and the engine intake air temperature. Then, the controller compares the currently obtained target fan rotating speed with the actually measured fan rotating speed, and outputs a first control signal for increasing the fan rotating speed up to the target fan rotating speed to the fan 105 if the target fan rotating speed is higher than the actually measured fan rotating speed as the result of the comparison, while outputting a second control signal for decreasing the fan rotating speed down to the target fan rotating speed to the braking device 107 if the target fan rotating speed is lower than the actually measured fan rotating speed as the result of the comparison.

The braking device (e.g., clutch) 107 brakes a fan rotating operation under the control of the controller 106.

The battery 108 is charged with electric energy which is caused by a rotating force that is generated while the fan rotating speed is decreased from the actually measured fan rotating speed to the target fan rotating speed by the braking device 107. That is, in the case of a cooling fan that is fixed to the engine crank shaft, the fan is rotated in proportion to an engine rpm regardless of the cooling water temperature. In the case where the engine rpm is high even if the temperature of the cooling water is low, the rotating speed of the fan becomes high, and thus the fan is rotated at high speed to cause inefficiency of the fan. However, according to the present invention, the braking device and the controller are mounted, and a larger amount of electric energy can be generated through compulsory reduction of the rotating speed of the fan using the braking device, and the electric energy that is generated at that time can be stored in the battery in the case where the cooling water temperature is low. Accordingly, the battery is useful to the charging system of the hybrid system.

Hereinafter, the operation of the battery charging system for a hybrid construction machine using the rotating force of the fan according to the present invention illustrated in Fig. 1 will be described with reference to Fig. 2.

Fig. 2 is a flowchart sequentially illustrating the operation of a battery charging system for a hybrid construction machine using a rotating force of a fan according to the present invention.

As illustrated in Fig. 2, according to the charging method according to the present invention, a plurality of temperature sensors 101 to 103 respectively sense a current cooling water temperature, a hydraulic fluid temperature, and an engine intake air temperature (S201 to S203).

Then, a speed measurement means (e.g., tachometer) 104 measures the current fan rotating speed.

Next, a controller 106 outputs a control signal for decreasing the fan rotating speed down to a target fan rotating speed if the current target fan rotating speed, which is obtained depending on the current cooling water temperature, the hydraulic fluid temperature, and the engine intake air temperature, is lower than the actually measured fan rotating speed that is measured by the speed measurement means 104.

Specifically, the controller obtains the current target fan rotating speed depending on the current cooling water temperature, the hydraulic fluid temperature, and the engine intake air temperature that are input from the temperature sensors 101 to 103 using the target fan rotating speed that is differently set according to the current cooling water temperature, the hydraulic fluid temperature, and the engine intake air temperature (S204).

Then, the controller compares the currently obtained target fan rotating speed with the actually measured fan rotating speed (S205).

If the target fan rotating speed is higher than the actually measured fan rotating speed as the result of the comparison, the controller outputs a first control signal for increasing the fan rotating speed up to the target fan rotating speed to the fan 105 (S206 to S207).

In contrast, if the target fan rotating speed is lower than the actually measured fan rotating speed as the result of the comparison, the controller outputs a second control signal for decreasing the fan rotating speed down to the target fan rotating speed to the braking device 107 (S208).

Then, a braking device (e.g., clutch) 107 brakes the fan rotating operation under the control of the controller 106 (S209).

In this case, the rotating force is generated while the fan rotating speed is decreased from the actually measured fan rotating speed to the target fan rotating speed by the braking device 107, and the electric energy that is generated by the rotating force is charged in a battery 108 (S210).

That is, through the above-described control, the electric energy, which is caused by the rotating force that is generated while the fan rotating speed is decreased from the actually measured fan rotating speed to the target fan rotating speed by the braking device 107, is charged in the battery 108.

For example, in the case of the cooling fan that is fixed to the engine crank shaft, the fan is rotated in proportion to the engine rpm regardless of the cooling water temperature. In the case where the engine rpm is high even if the temperature of the cooling water is low, the rotating speed of the fan becomes high, and thus the fan is rotated at high speed to cause inefficiency of the fan. However, according to the present invention, the braking device and the controller are mounted, and a larger amount of electric energy can be generated through compulsory reduction of the rotating speed of the fan using the braking device, and the electric energy that is generated at that time can be stored in the battery in the case where the cooling water temperature is low. Accordingly, the battery is useful to the charging system of the hybrid system.

As described above, according to the present invention, the braking device and the controller are mounted, and a larger amount of electric energy can be generated through compulsory reduction of the rotating speed of the fan using the braking device, and the electric energy that is generated at that time can be stored in the battery in the case where the cooling water temperature is low. Accordingly, the engine operating time can be reduced, and the fuel efficiency can be improved.

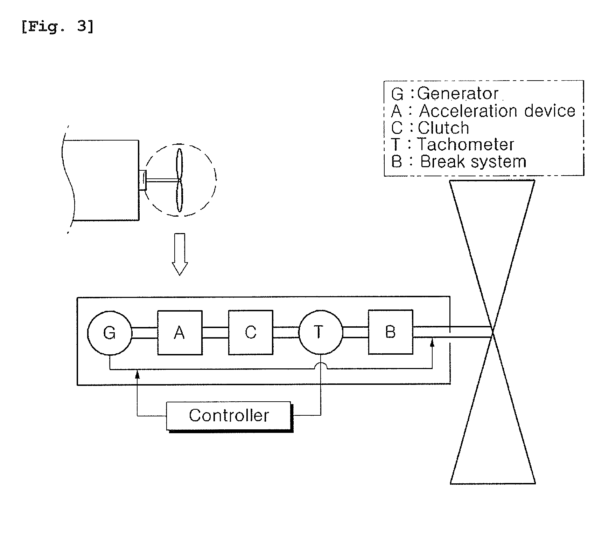

Fig. 3 is a diagram illustrating an example of a battery charging system for a hybrid construction machine according to the present invention.

As illustrated in Fig. 3, the battery charging system according to the present invention includes a specific fan, a controller controlling a braking device (a clutch C and a brake system B in the drawing) of the fan, and a battery charged with electric energy.

Here, in the case where the current target fan rotating speed that is obtained depending on the current cooling water temperature, the hydraulic fluid temperature, and the engine intake air temperature is lower than the actually measured fan rotating speed, the controller controls the braking device (the clutch C and the brake system B in the drawing) to decrease the fan rotating speed down to the target rotating speed.

Further, through the above-described control, the electric energy, which is caused by the rotating force that is generated while the fan rotating speed is decreased from the actually measured fan rotating speed to the target fan rotating speed by the braking device, is charged in the battery.

On the other hand, through the control of the braking device, the current target fan rotating speed is obtained depending on the current cooling water temperature, the hydraulic fluid temperature, and the engine intake air temperature using the target fan rotating speed that is differently set by the controller according to the cooling water temperature, the hydraulic fluid temperature, and the engine intake air temperature.

Then, the obtained current target rotating speed and the actually measured fan rotating speed are compared with each other.

If the target fan rotating speed is higher than the actually measured fan rotating speed as the result of the comparison, a first control signal for increasing the fan rotating speed up to the target fan rotating speed is output to the fan.

On the other hand, if the target fan rotating speed is lower than the actually measured fan rotating speed as the result of the comparison, a second control signal for decreasing the fan rotating speed down to the target fan rotating speed is output to the braking device.

For reference, a tachometer T that is a speed measurement means is used to measure the current fan rotating speed.

### INDUSTRIAL APPLICABILITY

As apparent from the above description, the present invention can be used in a battery charging system and a charging method thereof for a hybrid construction machine using a rotating force of a fan, which can reduce an engine operating time through storing of electric energy that is generated by the rotating force of the fan in a battery, and thus can improve fuel efficiency.

## Claims

1. A charging method of a battery charging system for a hybrid construction machine using a rotating force of a fan, including the fan, a controller controlling a braking device of the fan, and a battery charged with electric energy, comprising:
Controlling, by the controller, the braking device to decrease a fan rotating speed down to a target fan rotating speed if the current target fan rotating speed, which is obtained depending on a current cooling water temperature, a hydraulic fluid temperature, and an engine intake air temperature, is lower than an actually measured fan rotating speed; and
charging, by the braking device, the electric energy, which is caused by a rotating force that is generated while the fan rotating speed is decreased from the actually measured fan rotating speed to the target fan rotating speed, in the battery.

2. The charging method according to claim 1, wherein the step of controlling the braking device comprises:
Obtaining, by the controller, the current target fan rotating speed depending on the current cooling water temperature, the hydraulic fluid temperature, and the engine intake air temperature using the target fan rotating speed that is differently set according to the current cooling water temperature, the hydraulic fluid temperature, and the engine intake air temperature;
comparing the currently obtained target fan rotating speed with the actually measured fan rotating speed; and
outputting a first control signal for increasing the fan rotating speed up to the target fan rotating speed to the fan if the target fan rotating speed is higher than the actually measured fan rotating speed as the result of the comparison, and outputting a second control signal for decreasing the fan rotating speed down to the target fan rotating speed to the braking device if the target fan rotating speed is lower than the actually measured fan rotating speed as the result of the comparison.

3. A battery charging system for a hybrid construction machine using a rotating force of a fan, comprising:
a speed measurement means for measuring an actual fan rotating speed during measurement;
a controller outputting a control signal for decreasing the fan rotating speed down to a target fan rotating speed if the current target fan rotating speed, which is obtained depending on a current cooling water temperature, a hydraulic fluid temperature, and an engine intake air temperature, is lower than an actually measured fan rotating speed that is measured by the speed measurement means;
a braking device of the fan braking a fan rotating operation under the control of the controller; and
a battery charged with electric energy which is caused by a rotating force that is generated while the fan rotating speed is decreased from the actually measured fan rotating speed to the target fan rotating speed by the braking device.

4. The battery charging system according to claim 3, wherein the controller obtains the current target fan rotating speed depending on the current cooling water temperature, the hydraulic fluid temperature, and the engine intake air temperature using the target fan rotating speed that is differently set according to the current cooling water temperature, the hydraulic fluid temperature, and the engine intake air temperature; compares the currently obtained target fan rotating speed with the actually measured fan rotating speed; and outputs a first control signal for increasing the fan rotating speed up to the target fan rotating speed to the fan if the target fan rotating speed is higher than the actually measured fan rotating speed as the result of the comparison, while outputting a second control signal for decreasing the fan rotating speed down to the target fan rotating speed to the braking device if the target fan rotating speed is lower than the actually measured fan rotating speed as the result of the comparison.
